# EUROPÄISCHE PATENTSCHRIFT

(11) **EP 1 819 742 B1**
(45) Veröffentlichungstag und Bekanntmachung des Hinweises auf die Patenterteilung: **16.04.2008**
(21) Anmeldenummer: 05813715.9
(22) Anmeldetag: 01.12.2005
(51) Int. Cl.: C08F 210/02, C08F 210/08, C08L 23/08, C08G 18/67, C04B 24/08, C08L 31/02

(54) **HYDROPHOBIERENDES, IN WASSER REDISPERGIERBARES POLYMERPULVER**
HYDROPHOBING POLYMER POWDER THAT CAN BE REDISPERSED IN WATER
POUDRE POLYMERE HYDROPHOBE REDISPERSABLE DANS L'EAU

(30) Priorität: 09.12.2004 DE 102004059377
(43) Veröffentlichungstag der Anmeldung: 22.08.2007
(73) Patentinhaber: Wacker Polymer Systems GmbH & Co. KG, 84489 Burghausen (DE)
(72) Erfinder: BACHER, Andreas, 84489 Burghausen (DE); WEITZEL, Hans-Peter, 84571 Reischach (DE); JODLBAUER, Franz, 84533 Marktl (DE)
(74) Vertreter: Schuderer, Michael
(86) Internationale Anmeldenummer: PCT/EP2005/012841
(87) Internationale Veröffentlichungsnummer: WO 2006/061139

(56) Entgegenhaltungen:
- EP-A- 1 110 978
- EP-A- 1 323 752
- EP-A- 1 352 915
- WO-A-99/42500
- WO-A-20/04103928
- US-A- 4 098 746

## Beschreibung

Die Erfindung betrifft ein hydrophobierendes, in Wasser redispergierbares Polymerpulver, Verfahren zu dessen Herstellung, und dessen Verwendung.

In Wasser redispergierbare Pulver auf der Basis von Homo- oder Copolymerisaten von ethylenisch ungesättigten Monomeren werden im Baubereich als Bindemittel, gegebenenfalls in Kombination mit hydraulisch abbindenden Bindemitteln wie Zement, eingesetzt. Beispielsweise dienen diese in Bauklebern, Putzen, Mörteln und Farben der Verbesserung der mechanischen Festigkeit und der Haftung. Bei kalk- oder zementgebundenen Baustoffen wie Putzen, Spachtelmassen und Bauklebern besteht zudem die Notwendigkeit diese vor Witterungseinflüssen zu schützen. Bei Regen oder Schnee werden die Baustoffe, beispielsweise der Außenputz, bedingt durch deren Kapillaraktivität durchfeuchtet, was zu irreversiblen Schäden an der Bausubstanz führen kann. Um dies zu verhindern ist es schon lange gängige Praxis, die Baustoffe zu hydrophobieren.

Aus der EP 149098 A2 ist bekannt, zur Verbesserung der Hydrophobizität, Redispersionspulver auf Basis von Vinylchlorid-Ethylen-Mischpolymerisaten einzusetzen. Die EP 493168 A1 beschreibt die Verwendung von mit Silikonen modifizierten Redispersionspulvern zur Hydrophobierung von Baustoffen. Aus der EP 741760 B1 ist die Verwendung von mit Organosiliciumverbindungen modifizierten Redispersionspulvern zur Hydrophobierung bekannt. Die Hydrophobierung mit Fettsäureestern enthaltenden Redispersionspulvern wird in DE 10049127 A1, EP 1193287 A2 und EP 1394193 A1 beschrieben. In der DE-A 10323205 wird der Einsatz von hydrophobierenden, in Wasser redispergierbaren Additiven empfohlen, auf Basis von Fettsäureverbindungen, gegebenenfalls in Kombination mit Organosiliciumverbindungen.

Die EP 1323752 A1 beschreibt ein Verfahren zur kontinuierlichen Polymerisation von mit Polyvinylalkohol stabilisierten Polymerisaten auf der Basis von Vinylestern und Ethylen, welches ohne Verwendung von Saatlatex arbeitet und bei dem der Schutzkolloid- und Monomer-Anteil in definierter Weise dosiert werden. Die EP 1352915 A1 betrifft ebenfalls ein Verfahren zur kontinuierlichen Polymerisation von mit Polyvinylalkohol stabilisierten Polymerisaten auf der Basis von Vinylestern und Ethylen, wobei die Redoxinitiatorkombination in definierter Weise während der Polymerisation zugeführt wird.

Der Erfindung lag die Aufgabe zugrunde, ein in Wasser redispergierbares Polymerpulver auf der Basis von ethylenisch ungesättigten Monomeren zur Verfügung zu stellen, welches aufgrund seiner Polymerzusammensetzung hydrophobierend wirkt, und welches verträglich ist mit weiteren hydrophobierend wirkenden Bestandteilen.

Gegenstand der Erfindung ist ein hydrophobierendes, in Wasser redispergierbares Polymerpulver enthaltend
a) ein Polymerisat mit
   a1) 50 bis 90 Gew.-Teile Vinylacetat-Monomereinheiten
   a2) 5 bis 50 Gew.- Teile Vinylester-Monomereinheiten von Vinylestern von alpha-verzweigten Monocarbonsäuren mit 2 bis 20 C-Atomen,
   a3) 1 bis 30 Gew.- Teile (Meth)acrylsäurester-Monomereinheiten von Alkoholen mit 1 bis 15 C-Atomen,
   a4) 1 bis 40 Gew.- Teile Vinylester-Monomereinheiten von langkettigen Monocarbonsäuren mit 10 bis 20 C-Atomen,
   a5) 0 bis 20 Gew.- Teile Ethyleneinheiten, sowie gegebenenfalls
   a6) weitere Hilfsmonomereinheiten, wobei sich die Angaben in Gew.- Teile auf 100 Gew.-Teile aufaddieren,
b) 0.5 bis 30 Gew.-% ein oder mehrere, wasserlösliche Schutzkolloide,
c) 0 bis 20 Gew.-% einer oder mehrerer Organosiliciumverbindungen,
d) 0 bis 20 Gew.-% Fettsäure oder Derivate der Fettsäuren,
e) 0 bis 30 Gew.-% Antiblockmittel,
wobei die Angaben in Gew.-% auf das Gesamtgewicht des Polymerisats a)bezogen sind.

Vorzugsweise werden a1) 50 bis 70 Gew.-Teile Vinylacetat, bezogen auf 100 Gew.-Teile Polymerisat copolymerisiert.

Bevorzugte Vinylester von alpha-verzweigten Monocarbonsäuren mit 2 bis 20 C-Atomen sind Vinylpivalat und Versaticsäure-Vinylester von alpha-verzweigten Monocarbonsäuren mit 9 bis 15 C-Atomen, besonders bevorzugt VeoVa10^{R} (Handelsname der Firma Resolution). Vorzugsweise werden 20 bis 40 Gew.-Teile des Vinylester a2), bezogen auf 100 Gew.-Teile Polymerisat, copolymerisiert.

Bevorzugte Meth)acrylsäurester-Monomereinheiten a3) sind die Acrylsäurester von unverzweigten oder verzweigten Alkoholen mit 1 bis 15 C-Atomen, besonders bevorzugt sind Acrylsäurester von unverzweigten oder verzweigten Alkoholen mit 1 bis 8 C-Atomen, am meisten bevorzugt sind Methylacrylat, n-Butylacrylat, t-Butylacrylat und 2-Ethylhexylacrylat. Vorzugsweise werden 1 bis 10 Gew.-Teile des (Meth)acrylsäurester a3), bezogen auf 100 Gew.-Teile Polymerisat, copolymerisiert.

Vinylester-Monomereinheiten a4) sind solche von langkettigen, unverzweigten Monocarbonsäuren mit 10 bis 20 C-Atomen, bevorzugt leiten diese sich von Vinyllaurat ab. Vorzugsweise werden 1 bis 10 Gew.-Teile, des Vinylester a4), bezogen auf 100 Gew.-Teile Polymerisat, copolymerisiert.

Falls Ethylen copolymerisiert wird, beträgt der Ethylenanteil a5) bevorzugt 5 bis 20 Gew.-Teile.

Geeignete Hilfsmonomere a6) sind ethylenisch ungesättigte Mono- und Dicarbonsäuren wie Acrylsäure, Methacrylsäure; ethylenisch ungesättigte Carbonsäureamide und -nitrile wie Acrylamid und Acrylnitril; ethylenisch ungesättigte Sulfonsäuren bzw. deren Salze, vorzugsweise Vinylsulfonsäure, 2-Acrylamido-2-methyl-propansulfonsäure. Weitere Beispiele sind vorvernetzende Comonomere wie mehrfach ethylenisch ungesättigte Comonomere, beispielsweise Divinyladipat, Diallylmaleat, Allylmethacrylat oder Triallylcyanurat, oder nachvernetzende Comonomere, beispielsweise N-Methylolacrylamid (NMA), Alkylether wie der Isobutoxyether oder Ester des N-Methylolacrylamids. Weitere Beispiele sind siliciumfunktionelle Comonomere, wie (Meth)acryloxypropyltri(alkoxy)-Silane. Falls Hilfsmonomereinheiten im Polymerisat enthalten sind, dann im allgemeinen in einer Menge von 0.5 bis 10 Gew.-Teilen.

Am meisten bevorzugt wird ein Polymerisat a) enthaltend a1) 50 bis 70 Gew.-Teile Vinylacetat-Monomereinheiten, a2) 20 bis 40 Gew.-Teile Monomereinheiten von Versaticsäure-Vinylestern von alpha-verzweigten Monocarbonsäuren mit 9 bis 15 C-Atomen, a3) 1 bis 10 Gew.-Teile Monomereinheiten von Acrylsäurestern von unverzweigten oder verzweigten Alkoholen mit 1 bis 8 C-Atomen, a4) 1 bis 10 Gew.-Teile Vinylester-Monomereinheiten von langkettigen Monocarbonsäuren mit 10 bis 20 C-Atomen, wobei sich die Angaben in Gew.- Teile auf 100 Gew.-Teile aufaddieren.

Geeignete wasserlösliche Schutzkolloide b) sind teilverseifte und vollverseifte Polyvinylalkohole; Polyvinylpyrrolidone; Polyvinylacetale; Polysaccharide in wasserlöslicher Form wie Stärken (Amylose und Amylopectin), Cellulosen und deren Carboxymethyl-, Methyl-, Hydroxyethyl-, Hydroxypropyl-Derivate; Proteine wie Casein oder Caseinat, Sojaprotein, Gelatine; Ligninsulfonate; synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Bevorzugt werden teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 95 Mol-% und einer Höpplerviskosität, in 4 %-iger wässriger Lösung, von 1 bis 30 mPas, vorzugsweise 3 bis 15 mPas (Methode nach Höppler bei 20°C, DIN 53015). Der Hydrolysegrad wird gemäß DIN 53401 mittels Verseifung der Restacetatgruppen mit NaOH und Rücktitration der überschüssigen NaOH mit HCl bestimmt. Bevorzugt sind auch teilverseifte oder vollverseifte, hydrophob modifizierte Polyvinylalkohole mit einem Hydrolysegrad von 80 bis 100 Mol-% und einer Höpplerviskosität, in 4 %-iger wässriger Lösung, von 1 bis 30 mPas, vorzugsweise 3 bis 15 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 oder 9 bis 11 C-Atomen, Dialkylmaleinate und Dialkylfumarate wie Diisopropylmaleinat und Diisopropylfumarat, Vinylchlorid, Vinylalkylether wie Vinylbutylether, alpha-Olefine mit 2 bis 12 C-Atomen wie Ethen, Propen und Decen. Der Anteil der hydrophoben Einheiten beträgt vorzugsweise 0.1 bis 10 Gew.-%, bezogen auf das Gesamtgewicht des teil- oder vollverseiften Polyvinylalkohols. Besonders bevorzugt sind teilverseifte oder vollverseifte Copolymerisate von Vinylacetat mit Isopropenylacetat mit einem Hydrolysegrad von 95 bis 100 Mol-%. Es können auch Gemische der genannten Polyvinylalkohole eingesetzt werden.

Am meisten bevorzugt werden teilverseifte Polyvinylalkohole mit einem Hydrolysegrad von 85 bis 94 Mol-% und einer Höpplerviskosität, in 4 %-iger wässriger Lösung, von 3 bis 15 mPas (Methode nach Höppler bei 20°C, DIN 53015), sowie teilverseifte oder vollverseifte Copolymerisate von Vinylacetat mit Isopropenylacetat mit einem Hydrolysegrad von 95 bis 100 Mol-%. Die genannten Polyvinylalkohole sind mittels dem Fachmann bekannter Verfahren zugänglich.

Geeignete Organosiliciumverbindungen c) sind aus der Gruppe umfassend Kieselsäureester, Silane, Polysilane, Organosilanole, Di-, Oligo- und Polsiloxane, Carbosilane, Polycarbosilane, Carbosiloxane, Polycarbosiloxane, Polysilylendisiloxane, insbesondere Kieselsäureester Si(OR')4, Silane wie Tetraorganosilane SiR₄ und Organoorganoxysilane SiRₙ(OR')₄₋ₙ mit n = 1 bis 3, Polysilane mit vorzugsweise der allgemeinen Formel R₃Si(SiR₂)ₙSiR₃ mit n = 0 bis 500, Organosilanole SiRₙ(OH)₄₋ₙ, Di-, Oligo- und Polsiloxane aus Einheiten der allgemeinen Formel R_{c}H_{d}Si(OR')ₑ(OH)_{f}O_{(4-c-d-e-f)/2} mit c = 0 bis 3, d = 0 bis 1, e = 0 bis 3, f = 0 bis 3 und wobei die Summe c+d+e+f je Einheit höchstens 3.5 ist, wobei jeweils R gleich oder verschieden ist und verzweigte oder unverzweigte Alkylreste mit 1 bis 22 C-Atomen, Cycloalkylreste mit 3 bis 10 C-Atomen, Alkylenreste mit 2 bis 4 C-Atomen, sowie Aryl-, Aralkyl-, Alkylaryl-Reste mit 6 bis 18 C-Atomen bedeutet, und R' gleiche oder verschiedene Alkylreste und Alkoxyalkylenreste mit jeweils 1 bis 4 C-Atomen bedeutet, vorzugsweise Methyl und Ethyl bedeutet, wobei die Reste R und R' auch mit Halogenen wie Cl, mit Ether-, Thioether-, Ester-, Amid-, Nitril-, Hydroxyl-, Amin-, Carboxyl-, Sulfonsäure-, Carbonsäureanhydrid- und Carbonyl-Gruppen substituiert sein können, und wobei im Fall der Polysilane R auch die Bedeutung OR' haben kann. Geeignet sind auch Carbosilane, Polycarbosilane, Carbosiloxane, Polycarbosiloxane, Polysilylendisiloxane Bevorzugt als Komponente c) sind Tetramethoxysilan, Tetraethoxysilan, Methyltripropoxysilan, Methyltri(ethoxyethoxy)silan, Vinyltri(methoxyethoxy)silan, (Meth)acryloxypropyltrimethoxysilan, (Meth)acryloxypropyltriethoxysilan, γ-Chlorpropyltriethoxysilan, β-Nitrilethyltriethoxysilan, γ-Mercaptopropyltrimethoxysilan, γ-Mercaptopropyltriethoxysilan, Phenyltriethoxysilan, Isooctyltriethoxysilan, n-Octyltriethoxysilan, Hexadecyltriethoxysilan, Dipropyldiethoxysilan, Methylphenyldiethoxysilan, Diphenyldimethoxysilan, Methylvinyltri-(ethoxyethoxy)silan, Tetramethyldiethoxydisilan, Trimethyltrimethoxydisilan, Trimethyltriethoxydisilan, Dimethyltetramethoxydisilan, Dimethyltetraethoxydisilan, mit Trimethylsiloxygruppen endblockierte Methylhydrogenpolysiloxane, mit Trimethylsiloxygruppen endblockierte Mischpolymere aus Dimethylsiloxan- und Methylhydrogensiloxan-Einheiten, Dimethylpolysiloxane, sowie Dimethylpolysiloxane mit Si-OH-Gruppen in den endständigen Einheiten. Am meisten bevorzugt werden die Organoorganoxysilane SiRₙ(OR')₄₋ₙ mit n = 1 bis 3, insbesondere Isooctyltriethoxysilan, n-Octyltriethoxysilan, Hexadecyltriethoxysilan.

Vorzugsweise wird die Komponente c) in einer Menge von 0.1 bis 20 Gew.-%, besonders bevorzugt 1 bis 10 Gew.-%, jeweils bezogen auf das Polymerisat a), eingesetzt. Die Herstellung der genannten Organosiliciumverbindungen kann nach Verfahren erfolgen wie sie in Noll, Chemie und Technologie der Silicone, 2. Auflage 1968, Weinheim, und in Houben-Weyl, Methoden der organischen Chemie, Band E20, Georg Thieme Verlag, Stuttgart (1987) beschrieben sind.

Als Komponente d) geeignet sind allgemein Fettsäuren und Fettsäurederivate, die unter alkalischen Bedingungen, vorzugsweise pH > 8, Fettsäure bzw. das entsprechende Fettsäureanion freisetzen. Bevorzugt werden Fettsäureverbindungen aus der Gruppe der Fettsäuren mit 8 bis 22 C-Atomen, deren Metallseifen, deren Amide, sowie deren Ester mit einwertigen Alkoholen mit 1 bis 14 C-Atomen, mit Glykol, mit Polyglykol, mit Polyalkylenglykol, mit Glycerin, mit Mono-, Di- oder Triethanolamin, mit Monosacchariden.

Geeignete Fettsäuren sind verzweigte und unverzweigte, gesättigte und ungesättigte Fettsäuren mit jeweils 8 bis 22 C-Atomen. Beispiele sind Laurinsäure (n-Dodecansäure), Myristinsäure (n-Tetradecansäure), Palmitinsäure (n-Hexadecansäure), Stearinsäure (n-Octadecansäure) sowie Ölsäure (9-Dodecensäure).

Geeignete Metallseifen sind die der obengenannten Fettsäuren mit Metallen der 1. bis 3. Hauptgruppe bzw. 2. Nebengruppe des PSE, sowie mit Ammoniumverbindungen NX₄⁺, wobei X gleich oder verschieden ist und für H, C₁- bis C₈-Alkylrest und C₁- bis C₈-Hydroxyalkylrest steht. Bevorzugt werden Metallseifen mit Lithium, Natrium, Kalium, Magnesium, Calcium, Aluminium, Zink, und den Ammoniumverbindungen.

Geeignete Fettsäureamide sind die mit Mono- oder Diethanolamin und den obengenannten C₈- bis C₂₂-Fettsäuren erhältlichen Fettsäureamide.

Als Komponente d) geeignete Fettsäureester sind die C₁- bis C₁₄-Alkylester und -Alkylarylester der genannten C₈- bis C₂₂-Fettsäuren, vorzugsweise Methyl-, Ethyl-, Propyl-, Butyl-, Ethylhexyl-Ester sowie der Benzylester.
Geeignete Fettsäureester sind auch die Mono-, Di- und Polyglykolester der C₈- bis C₂₂-Fettsäuren.
Weitere geeignete Fettsäureester sind die Mono- und Diester von Polyglykolen und/oder Polyalkylenglykolen mit bis zu 20 Oxyalkylen-Einheiten, wie Polyethylenglykol und Polypropylenglykol.
Geeignet sind auch die Mono-, Di- und Tri-Fettsäureester des Glycerins mit den genannten C₈- bis C₂₂-Fettsäuren, sowie die Mono-, Di- und Tri-Fettsäureester von Mono-, Di- und Triethanolamin mit den genannten C₈- bis C₂₂-Fettsäuren.
Geeignet sind auch die Fettsäureester von Sorbit und Mannit.

Besonders bevorzugt sind die C₁- bis C₁₄-Alkylester und Alkylarylester der Laurinsäure und der Ölsäure, Mono- und Diglykolester der Laurinsäure und der Ölsäure, sowie die Mono-, Di- und Tri-Fettsäureester des Glycerins mit der Laurinsäure und der Ölsäure.

Die genannten Fettsäuren und Fettsäurederivate können allein oder im Gemisch eingesetzt werden. Im allgemeinen wird die Komponente d) in einer Menge von 1 bis 20 Gew.-%, bezogen auf das Polymerisat a), eingesetzt.

Geeignete Antiblockmittel e) sind Ca-Carbonat, Mg-Carbonat, Talk, Gips, gemahlene Tone, Kaoline wie Metakaolin sowie feingemahlene Aluminiumsilikate, Kieselgur, kolloidales Silikagel, pyrogen erzeugtes Siliciumdioxid, jeweils mit Teilchengrößen vorzugsweise im Bereich von 10 nm bis 10 µm.

Die Herstellung des redispergierbaren Polymerpulvers erfolgt in an sich bekannter Art und Weise mittels radikalisch initiierter Emulsionspolymerisation in wässrigem Medium, und anschließender Trocknung der damit erhaltenen wässrigen Polymerdispersion. Die Emulsionspolymerisation wird in Gegenwart von Schutzkolloid b) und/oder Emulgator durchgeführt. Vorzugsweise wird ausschließlich mit Schutzkolloid b) stabilisiert. Die damit erhältlichen wässrigen Polymerdispersionen haben im allgemeinen einen Festgehalt von 25 bis 70 Gew.-%, vorzugsweise von 45 bis 65 Gew.-%.

Die Trocknung kann beispielsweise mittels Wirbelschichttrocknung, Dünnschichttrocknung (Walzentrocknung), Gefriertrocknung oder Sprühtrocknung erfolgen. Vorzugsweise wird sprühgetrocknet. Die Sprühtrocknung erfolgt im allgemeinen nach Zugabe von weiterem Schutzkolloid b) als Verdüsungshilfe. Soll das Polymerpulver noch Organosiliciumverbindung c) und/oder Fettsäure(derivate) d) enthalten, werden diese vorzugsweise der Polymerdispersion vor deren Trocknung zugegeben. Die Zugabe des Antiblockmittels e) erfolgt vorzugsweise solange das Pulver noch im Trocknungsgas suspendiert ist. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im allgemeinen im Bereich von 45°C bis 120°C, bevorzugt 60°C bis 90°C, je nach Anlage, Tg des Harzes und gewünschtem Trocknungsgrad, gewählt.

Die hydrophobierenden Additive können in vielfältigen Anwendungsbereichen eingesetzt werden. Beispielsweise in bauchemischen Produkten, gegebenenfalls in Verbindung mit hydraulisch abbindenden Bindemitteln wie Zementen (Portland-, Aluminat-, Trass-, Hütten-, Magnesia-, Phosphatzement) oder Wasserglas, oder in Gips-haltigen Massen, Kalk-haltigen Massen, oder zementfreien und Kunststoff-gebundenen Massen, für die Herstellung von Bauklebern, insbesondere Fliesenkleber und Vollwärmeschutzkleber, Putzen, Spachtelmassen, Fussbodenspachtelmassen, Verlaufsmassen, Dichtschlämmen, Fugenmörtel und Farben. Im allgemeinen wird das hydrophobierende Redispersionspulver in einer Menge von 0.1 bis 10 Gew.-%, bezogen auf das Gesamtgewicht der zu hydrophobierenden Rezeptur (ohne Wasseranteil), eingesetzt.

Besonders vorteilhaft ist der Einsatz des hydrophobierenden Redispersionspulvers, aufgrund der hervorragenden Hydrophobie und der gleichzeitg hohen Haftung auf Polystyrol, in Bauklebern und Beschichtungen für Wärmedämmverbundsysteme (WDVS).

Die nachfolgenden Beispiele dienen der weiteren Erläuterung der Erfindung:

### Beispiel 1:

In einem 6001-Reaktor wurden 66 kg deionisiertes Wasser, 105 kg einer 20 %-igen wässrigen Lösung eines Polyvinylalkohols mit einem Hydrolysegrad von 88 Mol-% und einer Viskosität nach Höppler von 4 mPas sowie 113.8 kg Vinylacetat, 52.7 kg VeoVa10 und 8.8 kg Butylacrylat vorgelegt. Der pH-Wert wurde mit Ameisensäure auf pH = 4.5 - 5.5 eingestellt. Anschließend wurde der Ansatz auf 65°C aufgeheizt.

Zum Starten der Polymerisation wurden die Initiatordosierungen, 1.5 %-ige wässrige t-Butylhydroperoxid-Lösung mit 960 g/h und eine 1.5 %-ige wässrige Brüggolith-Lösung mit 1400 g/h dosiert. Die Innentemperatur wurde durch externe Kühlung auf 75°C begrenzt. Die Dosierung wurden 30 Minuten nachdem der Ansatz einen Festgehalt von 52 % erreicht hat beendet. Nach Beendigung der Reaktion wurde das Polymerisat zur Entfernung von Restmonomer nachpolymerisiert. Zur Nachpolymerisation wurden nacheinander 300 g t-Butylhydroperoxid, als 10 %-ige wässrige Lösung, und 1300 g Brüggolith, als 10 %-ige wässrige Lösung, zugegeben. Der Ansatz wurde abgekühlt und anschließend über ein 250 pm Sieb abgefüllt.
Die Dispersion wurde mit 5 Gew.-% (fest/fest) Polyvinylalkohol mit einem Hydrolysegrad von 88 Mol-% und einer Viskosität nach Höppler von 4 mPas und mit 1 Gew.-% (fest/fest) Polyvinylalkohol mit einem Hydrolysegrad von 88 Mol-% und einer Viskosität nach Höppler von 13 mPas versetzt. Zudem wurden 6 Gew.-% Isooctyltriethoxysilan zugegeben und anschließend mit Wasser auf eine Viskosität von 250 mPas verdünnt. Die Dispersion wurde dann mittels Druckdüse versprüht. Als Verdüsungskomponente diente auf 4 bar vorgepreßte Luft, die gebildeten Tropfen wurden mit auf 125°C erhitzter Luft im Gleichstrom getrocknet. Das damit erhaltene trockene Pulver wurde mit 10 Gew.-% handelsüblichem Antiblockmittel (Kaolin) versetzt.

### Beispiel 2:

Die Herstellung erfolgte analog Beispiel 1, jedoch wurden zusätzlich noch 8.8 kg Vinyllaurat vorgelegt und Vinylacetat nur in einer Menge von 105 kg eingesetzt.

### Beispiel 3:

Die Herstellung erfolgte analog Beispiel 1, jedoch wurden 17.2 kg Butylacrylat vorgelegt und Vinylacetat nur in einer Menge von 105 kg eingesetzt.

### Beispiel 4:

Die Herstellung erfolgte analog Beispiel 1, jedoch wurden 17.2 kg Butylacrylat, 17.2 kg Vinyllaurat und 87.4 kg Vinylacetat eingesetzt.

### Beispiel 5:

Die Herstellung erfolgte analog Beispiel 1, jedoch wurden 30 bar Ethylen aufgedrückt und Vinylacetat nur in einer Menge von 105 kg eingesetzt.

### Vergleichsbeispiel 6:

Die Herstellung erfolgte analog Beispiel 1, jedoch wurde kein Butylacrylat eingesetzt.

Prüfung der Wasseraufnahme einer Putzmörtelschicht:
Folgende Mörtelrezeptur diente als Grundlage der Versuche:

| | |
|---|---|
| Weißzement | 70.9 Gew.-T. |
| Kalkhydrat | 68.1 Gew.-T. |
| Omya BL | 70.9 Gew.-T. |
| Titandioxid | 10.9 Gew.-T. |
| Cellulosefaser | 4.4 Gew.-T. |
| Calcilit 500 | 459.9 Gew.-T. |
| Calcilit 0.5-1.0 | 286.1 Gew.-T. |
| Celluloseether | 1.6 Gew.-T. |
| Bentonit | 1.7 Gew.-T. |
| Polymerpulver | 25.0 Gew.-T. |
| Summe: | 999.5 Gew.-T. |

Der Mörtel wurde mit einer Anmachwassermenge von 25 ml auf 100g Trockenmörtel angerührt und anschließend 4 mm dick auf eine Porenbetonplatte aufgetragen. Nach Aushärtung der Mörtelschicht wurden die nicht beschichteten Seiten der Porenbetonplatte mit einem Lack abgedichtet. Der Prüfkörper wurde 7 Tage bei Normklima (23°C / 50 % Luftfeuchte) konditioniert. Anschließend wurde dieser Prüfkörper mit der Mörtelschicht nach unten so in Wasser gelegt, dass dieser 1 cm tief eintaucht. Das Wasser dringt dabei im Laufe der Zeit durch die Putzschicht hindurch in die Porenbetonplatte hinein. Die eindringende Wassermenge kann durch Wägung festgestellt werden. Die Porenbetonplatte dient dabei als Saugreservoir. Da die Porenbetonplatte ohne Beschichtung das Wasser um ein Vielfaches schneller als der Putzmörtel aufsaugt, wird die pro Zeiteinheit aufgenommene Wassermenge hauptsächlich von der Putzmörtelschicht bestimmt.
Die Wasseraufnahme wird mittels der Wassereindringzahl WEZ ausgedrückt. Dies ist der Quotient, den man erhält, wenn die nach 24 Stunden Saugzeit ermittelte Wasseraufnahme pro Quadratmeter mit der Wurzel aus der Saugzeit dividiert wird.

**Tabelle 1:**

| WEZ | Bsp.1 | Bsp.2 | Bsp.3 | Bsp.4 | Bsp.5 | Vbsp.6 |
|---|---|---|---|---|---|---|
| kg/m²h^{0.5} | 0.35 | 0.20 | 0.33 | 0.15 | 0.35 | 0.50 |

Die Beispiele 2 und 4 zeigen, den Synergieeffekt, welche man durch die Copolymerisation von langkettigen Vinylestern in Kombination mit (Meth)acrylsäureester bezüglich Hydrophobierung erhält. Gegenüber herkömmlichen Vinylacetat-Copolymeren (Vbsp. 6) wird mit dem System Vinylacetat-VeoVa-Butylacrylat eine deutliche Verbesserung der Wasserabweisung erhalten (Bsp. 1, 3, 5), welche sich durch Copolymerisation von langkettigen Vinylestern (Bsp. 2, 4) noch deutlich steigern läßt.

## Patentansprüche

1. Hydrophobierendes, in Wasser redispergierbares Polymerpulver enthaltend
a) ein Polymerisat mit
a1) 50 bis 90 Gew.-Teile Vinylacetat-Monomereinheiten
a2) 5 bis 50 Gew.- Teile Vinylester-Monomereinheiten von Vinylestern von alpha-verzweigten Monocarbonsäuren mit 2 bis 20 C-Atomen,
a3) 1 bis 30 Gew.- Teile (Meth)acrylsäurester-Monomereinheiten von Alkoholen mit 1 bis 15 C-Atomen,
a4) 1 bis 40 Gew.- Teile Vinylester-Monomereinheiten von langkettigen Monocarbonsäuren mit 10 bis 20 C-Atomen,
a5) 0 bis 20 Gew.- Teile Ethyleneinheiten, sowie gegebenenfalls
a6) weitere Hilfsmonomereinheiten, wobei sich die Angaben in Gew.- Teile auf 100 Gew.-Teile aufaddieren,
b) 0.5 bis 30 Gew.-% ein oder mehrere, wasserlösliche Schutzkolloide,
c) 0 bis 20 Gew.-% Organosiliciumverbindung,
d) 0 bis 20 Gew.-% Fettsäure oder Derivate der Fettsäuren,
e) 0 bis 30 Gew.-% Antiblockmittel,
wobei die Angaben in Gew.-% auf das Gesamtgewicht des Polymerisats a) bezogen sind.

2. Hydrophobierendes, in Wasser redispergierbares Polymerpulver nach Anspruch 1 mit 20 bis 40 Gew.-Teilen Vinylester-Monomereinheiteh a2) von Versaticsäure-Vinylestern von alpha-verzweigten Monocarbonsäuren mit 9 bis 15 C-Atomen.

3. Hydrophobierendes, in Wasser redispergierbares Polymerpulver nach Anspruch 1 bis 2 mit 1 bis 10 Gew.-Teilen Acrylsäurester-Monomereinheiten a3) von Acrylsäurestern von unverzweigten oder verzweigten Alkoholen mit 1 bis 15 C-Atomen.

4. Hydrophobierendes, in Wasser redispergierbares Polymerpulver nach Anspruch 1 bis 3 mit 5 bis 20 Gew.-Teilen Ethylen-Monomereinheiten.

5. Hydrophobierendes, in Wasser redispergierbares Polymerpulver nach Anspruch 1 mit einem Polymerisat a) enthaltend a1) 50 bis 70 Gew.-Teile Vinylacetat-Monomereinheiten, a2) 20 bis 40 Gew.-Teile Monomereinheiten von Versaticsäure-Vinylestern von alpha-verzweigten Monocarbonsäuren mit 9 bis 15 C-Atomen, a3) 1 bis 10 Gew.-Teile Monomereinheiten von Acrylsäurestern von unverzweigten oder verzweigten Alkoholen mit 1 bis 8 C-Atomen, a4) 1 bis 10 Gew.-Teile Vinylester-Monomereinheiten von langkettigen, unverzweigten Monocarbonsäuren mit 10 bis 20 C-Atomen, wobei sich die Angaben in Gew.- Teile auf 100 Gew.-Teile aufaddieren.

6. Hydrophobierendes, in Wasser redispergierbares Polymerpulver nach Anspruch 1 bis 5 enthaltend als Schutzkolloid b) teilverseifte oder vollverseifte, gegebenenfalls hydrophob modifizierte Polyvinylalkohole mit einem Hydrolysegrad von 80 bis 100 Mol-% und einer Höpplerviskosität, in 4 %-iger wässriger Lösung, von 1 bis 30 mPas (Methode nach Höppler bei 20°C, DIN 53015).

7. Hydrophobierendes, in Wasser redispergierbares Polymerpulver nach Anspruch 1 bis 6 mit 0.1 bis 20 Gew.-%, bezogen auf das Polymerisat a), einer oder mehrerer Organosiliciumverbindungen c) aus der Gruppe umfassend Kieselsäureester, Silane, Polysilane, Organosilanole, Di-, Oligo- und Polsiloxane, Carbosilane, Polycarbosilane, Carbosiloxane, Polycarbosiloxane, Polysilylendisiloxane.

8. Hydrophobierendes, in Wasser redispergierbares Polymerpulver nach Anspruch 1 bis 7 mit 0.1 bis 20 Gew.-%, bezogen auf das Polymerisat a), einer oder mehrerer Verbindungen d) aus der Gruppe der Fettsäuren mit 8 bis 22 C-Atomen, deren Metallseifen, deren Amide, sowie deren Ester mit einwertigen Alkoholen mit 1 bis 14 C-Atomen, mit Glykol, mit Polyglykol, mit Polyalkylenglykol, mit Glycerin, mit Mono-, Di- oder Triethanolamin, mit Monosacchariden.

9. Verfahren zur Herstellung von hydrophobierenden, in Wasser redispergierbaren Polymerpulvern nach Anspruch 1 bis 8 mittels radikalisch initiierter Emulsionspolymerisation in wässrigem Medium, und anschließender Trocknung der damit erhaltenen wässrigen Polymerdispersion.

10. Verwendung der hydrophobierenden, in Wasser redispergierbaren Polymerpulver nach Anspruch 1 bis 8 in bauchemischen Produkten, gegebenenfalls in Verbindung mit hydraulisch abbindenden Bindemitteln wie Zementen oder Wasserglas, oder in Gips-haltigen Massen, Kalk-haltigen Massen, oder zementfreien und Kunststoff-gebundenen Massen, für die Herstellung von Bauklebern, Putzen, Spachtelmassen, Fussbodenspachtelmassen, Verlaufsmassen, Dichtschlämmen, Fugenmörtel und Farben.

11. Verwendung nach Anspruch 10 in Bauklebern und Beschichtungen für Wärmedämmverbundsysteme.

## Claims

1. Hydrophobicizing, water-redispersible polymer powder comprising
a) a polymer comprising
a1) from 50 to 90 parts by weight of vinyl acetate monomer units,
a2) from 5 to 50 parts by weight of vinyl ester monomer units derived from vinyl esters of alpha-branched monocarboxylic acids having from 2 to 20 carbon atoms,
a3) from 1 to 30 parts by weight of (meth)acrylic ester monomer units derived from alcohols having from 1 to 15 carbon atoms,
a4) from 1 to 40 parts by weight of vinyl ester monomer units derived from long-chain monocarboxylic acids having from 10 to 20 carbon atoms,
a5) from 0 to 20 parts by weight of ethylene units, and, if desired,
a6) further auxiliary monomer units, with the parts by weight adding up to 100 parts by weight,
b) from 0.5 to 30% by weight of one or more, water-soluble protective colloids,
c) from 0 to 20% by weight of organosilicon compound,
d) from 0 to 20% by weight of fatty acid or derivatives of fatty acids,
e) from 0 to 30% by weight of antiblocking agent,
where the % by weight data are based on the total weight of the polymer a).

2. Hydrophobicizing, water-redispersible polymer powder according to Claim 1 comprising from 20 to 40 parts by weight of vinyl ester monomer units a2) derived from vinyl esters of alpha-branched monocarboxylic acids having from 9 to 15 carbon atoms (Versatic acids).

3. Hydrophobicizing, water-redispersible polymer powder according to any of Claims 1 to 2 comprising from 1 to 10 parts by weight of acrylic ester monomer units a3) derived from acrylic esters of unbranched or branched alcohols having from 1 to 15 carbon atoms.

4. Hydrophobicizing, water-redispersible polymer powder according to any of Claims 1 to 3 comprising from 5 to 20 parts by weight of ethylene monomer units.

5. Hydrophobicizing, water-redispersible polymer powder according to Claim 1 comprising a polymer a) comprising a1) from 50 to 70 parts by weight of vinyl acetate monomer units, a2) from 20 to 40 parts by weight of monomer units derived from vinyl esters of alpha-branched monocarboxylic acids having from 9 to 15 carbon atoms (Versatic acids), a3) from 1 to 10 parts by weight of monomer units derived from acrylic esters of unbranched or branched alcohols having from 1 to 8 carbon atoms, a4) from 1 to 10 parts by weight of vinyl ester monomer units derived from long-chain, unbranched monocarboxylic acid having from 10 to 20 carbon atoms, with the parts by weight adding up to 100 parts by weight.

6. Hydrophobicizing, water-redispersible polymer powder according to any of Claims 1 to 5 comprising partially hydrolyzed or fully hydrolyzed, if desired hydrophobically modified polyvinyl alcohols having a degree of hydrolysis of from 80 to 100 mol% and a Höppler viscosity in 4% strength aqueous solution of from 1 to 30 mPas (Höppler method at 20°C, DIN 53015) as protective colloid b).

7. Hydrophobicizing, water-redispersible polymer powder according to any of Claims 1 to 6 comprising from 0.1 to 20% by weight, based on the polymer a), of one or more organosilicon compounds c) from the group consisting of silicic esters, silanes, polysilanes, organosilanols, disiloxanes, oligosiloxanes and polysiloxanes, carbosilanes, polycarbosilanes, carbosiloxanes, polycarbosiloxanes, polysilylenedisiloxanes.

8. Hydrophobicizing, water-redispersible polymer powder according to any of Claims 1 to 7 comprising from 0.1 to 20% by weight, based on the polymer a), of one or more compounds d) from the group consisting of fatty acids having from 8 to 22 carbon atoms, their metal soaps, their amides and their esters with monohydric alcohols having from 1 to 14 carbon atoms, with glycol, with polyglycol, with polyalkylene glycol, with glycerol, with monoethanolamine, diethanolamine or triethanolamine, with monosaccharides.

9. Process for producing hydrophobicizing, water-redispersible polymer powders according to any of Claims 1 to 8 by means of free-radically initiated emulsion polymerization in aqueous medium and subsequent drying of the resulting aqueous polymer dispersion.

10. Use of the hydrophobicizing, water-redispersible polymer powders according to any of Claims 1 to 8 in building chemical products, if desired in combination with hydraulically setting binders such as cements or water glass, or in CaSO₄-containing compositions, lime-containing compositions or cement-free and polymer-bonded compositions, for the production of building adhesives, renders, knifing fillers, flooring screeds, self-leveling compositions, sealing slurries, jointing mortars and paints.

11. Use according to Claim 10 in building adhesives and coatings for thermal insulation composite systems.

## Revendications

1. Poudre polymère hydrophobisante redispersible dans l'eau, contenant :
a) un polymère comprenant :
a1) de 50 à 90 parties en poids d'unités monomères d'acétate de vinyle,
a2) de 5 à 50 parties en poids d'unités monomères d'ester vinylique, d'esters vinyliques d'acides monocarboxyliques ramifiés en position α et comportant de 2 à 20 atomes de C,
a3) de 1 à 30 parties en poids d'unités monomères d'ester d'acide (méth)acrylique et d'alcools comportant de 1 à 15 atomes de C,
a4) de 1 à 40 parties en poids d'unités monomères d'ester vinylique d'acides monocarboxyliques à longue chaîne comportant de 10 à 20 atomes de C,
a5) de 0 à 20 parties en poids d'unités éthylène, et le cas échéant
a6) d'autres unités de monomères adjuvants, les indications de parties en poids totalisant 100 parties en poids,
b) de 0,5 à 30 % en poids d'un ou plusieurs colloïdes protecteurs solubles dans l'eau,
c) de 0 à 20 % en poids d'un composé organosilicique,
d) de 0 à 20 % en poids d'acide gras ou de dérivés d'acides gras,
e) de 0 à 30 % en poids d'un agent antiblocage,
les indications de % en poids se rapportant au poids total du polymère a).

2. Poudre polymère hydrophobisante redispersible dans l'eau suivant la revendication 1 contenant de 20 à 40 parties en poids d'unités monomères d'ester vinylique a2) d'esters vinyliques d'acide versatique d'acides monocarboxyliques ramifiés en position α et comportant de 9 à 15 atomes de C.

3. Poudre polymère hydrophobisante redispersible dans l'eau suivant les revendications 1 à 2 contenant de 1 à 10 parties en poids d'unités monomères d'ester acrylique a3) d'esters acryliques d'alcools non ramifiés ou ramifiés comportant de 1 à 15 atomes de C.

4. Poudre polymère hydrophobisante redispersible dans l'eau suivant les revendications 1 à 3, comportant de 5 à 20 parties en poids d'unités monomères d'éthylène.

5. Poudre polymère hydrophobisante redispersible dans l'eau suivant la revendication 1, avec un polymère a) contenant a1) de 50 à 70 parties en poids d'unités monomères d'acétate de vinyle, a2) de 20 à 40 parties en poids d'unités monomères d'esters d'acide versatique d'acides monocarboxyliques ramifiés en position α comportant de 9 à 15 atomes de C, a3) de 1 à 10 parties en poids d'unités monomères d'esters d'acide acryliques et d'alcools non ramifiés ou ramifiés comportant de 1 à 8 atomes de C, a4) de 1 à 10 parties en poids d'unités monomères d'ester vinylique d'acides monocarboxyliques à longue chaîne comportant de 10 à 20 atomes de C, les indications de parties en poids totalisant 100 parties en poids.

6. Poudre polymère hydrophobisante redispersible dans l'eau suivant les revendications 1 à 5, contenant en tant que colloïdes protecteurs b) des poly(alcools vinyliques) partiellement saponifiés ou totalement saponifiés à hydrophobie modifiée d'un degré d'hydrolyse de 80 à 100 % molaires et d'une viscosité Höppler, en solution aqueuse à 4 %, de 1 à 30 mPas (méthode selon Höppler à 20 °C, DIN 53015).

7. Poudre polymère hydrophobisante redispersible dans l'eau suivant les revendications 1 à 6, comportant de 0,1 à 20 % en poids, par rapport au polymère a), d'un ou plusieurs composés organosiliciques c) du groupe comprenant des esters de l'acide silicique, des silanes, des polysilanes, des organosilanols, des di-, oligo- et polysiloxanes, des carbosilanes, des polycarbosilanes, des carbosiloxanes, des polycarbosiloxanes, des polysilylène-disiloxanes.

8. Poudre polymère hydrophobisante redispersible dans l'eau suivant les revendications 1 à 7, comprenant de 0,1 à 20 % en poids, par rapport au polymère a), d'un ou plusieurs composés d) du groupe formé par des acides gras comportant de 8 à 22 atomes de C, leurs savons métalliques, leurs amides ainsi que leurs esters avec des alcools monovalents comportant de 1 à 14 atomes de C, avec du glycol, avec du polyglycol, avec un polyalkylène glycol, avec du glycérol, avec une mono-, di- ou triéthanolamine, avec des monosaccharides.

9. Procédé de préparation de poudres polymères hydrophobisantes redispersibles dans l'eau suivant les revendications 1 à 8 par polymérisation en émulsion à amorçage radicalaire en milieu aqueux, et séchage subséquent de la dispersion aqueuse de polymères ainsi obtenue.

10. Utilisation des poudres polymères hydrophobisantes redispersibles dans l'eau suivant les revendications 1 à 8 dans des produits chimiques pour la construction, le cas échéant conjointement avec des liants hydrauliques comme du ciment ou du verre soluble, ou dans des masses contenant du plâtre, des masses contenant de la chaux ou des masses à liant synthétique exemptes de ciment pour la préparation d'adhésifs pour matériaux de construction, d'enduits, de mastics, de bouche-pores pour sols, de masses de nivellement, de badigeons d'étanchéité, de mortiers de jointoiement et de colorants.

11. Utilisation suivant la revendication 10 dans des adhésifs pour matériaux de construction et des revêtements pour systèmes composites d'isolation thermique.
